# EUROPEAN PATENT SPECIFICATION

(11) **EP 2 841 385 B1**
(45) Date of publication and mention of the grant of the patent: **22.02.2017**
(21) Application number: 13720114.1
(22) Date of filing: 18.04.2013
(51) Int. Cl.: C02F 11/12, C10L 9/08, C10B 53/02, C02F 11/10, C02F 11/04, C10F 5/06, C02F 103/26

(54) **WET BIOMASS TREATMENT**
FEUCHTE BIOMASSEBEHANDLUNG
TRAITEMENT D'UNE BIOMASSE HUMIDE

(30) Priority: 23.04.2012 NL 2008682
(43) Date of publication of application: 04.03.2015
(73) Proprietor: Stichting Energieonderzoek Centrum Nederland, 1755 LE Petten (NL)
(72) Inventor: PELS, Jan Remmert, NL-1755 LE Petten (NL); KROKOS, Constantinos, NL-1755 LE Petten (NL)
(74) Representative: Nederlandsch Octrooibureau
(86) International application number: PCT/NL2013/050281
(87) International publication number: WO 2013/162355

(56) References cited:
- EP-A1- 2 206 688
- WO-A1-2010/112230
- FR-A- 880 308
- GB-A- 325 444
- GB-A- 191 006 041
- GB-A- 191 116 958
- NL-C- 1 716
- NL-C2- 1 029 909
- US-A- 4 477 257
- US-A- 5 217 625
- US-A1- 2002 079 273
- US-A1- 2011 258 914

## Description

The invention relates to a process for heat treatment of biomass, especially fibrous biomass, to remove salts and other undesired components and to make it suitable as a solid fuel.

### Background

Torrefaction is known to be a useful process for converting inexpensive biomass such as agricultural wastes and the like into high-grade fuels. In a torrefaction process the biomass is heated to moderately high temperatures, typically 200-320°C without added oxygen resulting in removal of most of the residual water and a gentle breakdown of ligneous constituents of biomass producing a gas fraction, the so-called "tor-gas", comprising water vapour, carbon dioxide and small organic molecules, and a compactable solid product, which can be process to a solid fuel, e.g. as a coal substitute.

As an example, WO 2005/056723 describes a torrefaction process, in which biomass is torrefied at between 200 and 320°C, and the gas produced by the torrefaction is cooled so as to condense impurities and combustible material.

NL 1029909 describes a pressurised torrefaction process, wherein the water remains in the liquid state during the heat treatment. This hydrothermal treatment leads to torrefaction of biomass and liberation of salts, which can be removed by mechanical means. However, if the hydrothermal treatment is performed in a single step with dewatering afterwards, the temperature must be relatively high in order to create the desired fuel characteristics, e.g. 190°C for grass or even 210°C for reeds and straw. At this temperature, water-soluble phenols and other undesired by-products are formed from decomposition. The pressed-out effluent then contains components that are not digestible and can even be toxic.

EP2206688 describes a hydrothermal process for carbonising biomass at between 190 and 230°C and between 10 and 30 bar for 1-5 hours, followed by separation of the resulting solid and liquid by wet oxidation treatment of the liquid. The purpose of the heat treatment is chemical conversion of the biomass.

WO 2010/112230 discloses a method for hydrothermally carbonising biomass involving a wet pressurised pretreatment at 90°C and subsequent carbonisation at e.g. 190-220°C and about 20 bar, followed by drying.

The present invention aims at providing a process for the treatment biomass which has one or more, preferably all, of the following advantages:
∘ biomass with relatively high water contents can be dewatered and processed;
∘ the aqueous fraction of the wet biomass is fermentable (anaerobically) to a high degree;
∘ dewatered biomass is converted to a useful solid fuel substitute having a high caloric value,
∘ the ash content, in particular the salt content of the resulting biomass is low and meets current and future standards for solid fuels;
∘ any residual effluents can be discharged or reused without environmental disadvantages;
∘ the overall process can be performed without the need of energy input.

### Summary of the invention

The invention provides a process for the heat treatment of biomass resulting in a solid which can be used as a fuel as well as a gaseous or liquid fermentation product in the form of biogas (methane) or of alcohols. It was also surprisingly found that an aqueous extract resulting from the process of the invention can be directly fed to an anaerobic treatment without hampering the anaerobic digestion in any way. The process thus further results in a fully anaerobically digestible effluent which does not contain undesired (thermal) degradation by-products. Yet, efficient dewatering and high levels of salt removal as well as torrefaction of the product can be achieved. The process is a chemical, hydrothermal treatment, which puts no limitations to the feedstock due to biology or link to seasonal availability. Biogas can be produced by digestion of liquid effluent and can be used on site to generate heat and possibly electricity, but it can also be upgraded to natural gas quality and used as green gas elsewhere. Essentially no waste has to be discharged. The output is biogas, heat, power, solid fuel and an effluent that can be discharged.

As in the case of dry torrefaction, an energy densification of the biomass is achieved in combination with improved grindability and water resistance. The process can be fully heat-integrated. An overall energy efficiency of 60-70% for the production of fuel can be achieved. The process can be run autonomously, so without input of heat from elsewhere. However, it can also be integrated with various forms of waste water treatment with much synergy in digestion and production of green heat and power, or optimized for external heat sources when available. Due to the possibility to run the process autonomously, it is possible to have decentralized production of high-quality solid fuel from bulky low-quality biomass. The optimum size of a decentralized unit depends on local conditions.

The conditions can be manipulated so that P, N and S, as well as other minerals and nutrients - other than K - may be dissolved into the effluent or stay behind in the solid phase. The former enables nutrient recovery from the processed effluent after digestion. This is of particular interest to those nutrients that cannot be recovered in the form of ashes after combustion, notably N and S.

### Detailed description of the invention

The invention pertains to a hydrothermal treatment of biomass with the objective to convert it into an attractive fuel. The process combines four improvements that are individually already interesting: dewatering, salt removal, drying and anaerobic digestion. In the process of the invention, biomass is treated in liquid water, so that the salts, as defined below, present in the biomass, go into solution. Moreover, the structure of the biomass can be changed in such a way that it becomes easy to dewater it mechanically. The process is preferentially performed in combination with anaerobic digestion of the effluent. This produces enough biogas to generate the energy to run the process autonomously if desired.

Thus the invention pertains to a process for the treatment of biomass comprising:
(a) pretreating wet biomass;
(b) extracting the pretreated biomass with water at a temperature between ambient temperature and 160°C (at a pressure which keeps water substantially liquid);
(c) mechanically dewatering the extracted biomass to produce a dewatered biomass and an aqueous effluent;
(g) subjecting the aqueous effluent produced in step (c) to an anaerobic treatment, while keeping the aqueous effluent at temperatures below 160°C.

The process further optionally comprises one or more of the following steps:
(d) heating the dewatered biomass at a temperature above 160°C.
(e) drying the heated biomass after step (d), comprising evaporation of water, preferably comprising steam explosion; the drying step may also precede step (d);
(f) processing the heat-treated and optionally dried biomass into a solid suitable as a fuel following, e.g. by compacting.

The invention also pertains to a process for the treatment of biomass comprising:
(a) (mechanically) pre-treating wet biomass;
(b) extracting the pre-treated biomass with liquid water at a temperature between ambient temperature and 160°C, especially between ambient temperature and 100°C;
(c) mechanically dewatering the extracted biomass to produce a dewatered biomass and an aqueous effluent;
(e) drying the dewatered biomass;
(g) subjecting the aqueous effluent to anaerobic fermentation.

Feedstocks that can be treated with the process of the invention include a wide variety of biomass: grass, hay, straw, leaves, bamboo, sugar beet heads, moss, clippings, garden waste; in short, all organic materials that are dry or wet, salty or leached, silage, half-decomposed. Also residues from food industry and agro sector, e.g. brewers grains, potato peels, straw, digestate from anaerobic digestion can be used. The biggest gain is made for wet, salt-containing biomass feed stocks like mowed grass and reeds. The water content of the feedstock may vary widely from e.g. 10% to 90%, in particular from 30 to 85 wt.%, i.e. a solid matter content of 15-70 wt.%. Even wood can be used, but the advantages of the invention apply less, because typically wood is low in salts and dry.

Feedstocks include biomass volumes that are currently unused, are left to decompose or are composted. Preferably the biomass is a fibrous biomass derived from plant material. Fibrous material can form a press cake in the dewatering step. The plant material can e.g. originate from woody plants, herbaceous plants, agricultural residues and forestry residues as described above. The process of the invention is particularly useful for the treatment of grasses, reeds and leaves.

Non-fibrous biomass such as sludge, e.g. the bottoms of straw fermentation for producing alcohols or digestate from anaerobic digestion, can also be treated with the process of the invention, and may require the use of flocculants or adsorptive materials as an aid for processing the biomass. Such flocculants include sludge dewatering polymers, preferably polymers which do not results in ashes, i.e. built on carbon, oxygen and hydrogen only. Most preferably, the polymer aids are based on biopolymers.

Prior to the heating steps of the process of the invention, the biomass can be pretreated in step (a). Such pretreatment may comprise removal of non-biomass such as sand, stones, plastic etc, by sieving or otherwise, shredding, cutting, chopping and/or screening and the like. The pretreatment especially comprises a mechanical pretreatment, which may involve breaking the cell structure of the biomass. This is an important step for allowing access to the cell content of the biomass during the subsequent washing and heat treatments. The mechanical pretreatment preferably comprises chipping, milling, grinding, or extrusion, using choppers, stone mills, ball mills, extruders, or the like. For non-fibrous materials, such as sludges, no extensive mechanical pretreatment is needed.

The heating or extracting step (b) serves to wash the biomass, especially for extracting water-soluble material, such as salts and hydrophilic organic substances. Step (b) can be performed in different modes. In a preferred embodiment, the heating step is performed at temperatures around 100°C or higher; a temperature above 160° is not desired since it would lead to excessive decomposition of the plant constituents, producing phenols, furfurals, methanol and other unwanted by-products. Heating above 100°C is performed at superatmospheric pressure so as to ensure that water largely remains in the liquid phase allowing water-soluble material, in particular salts, but also that saccharides and other organic components derived from cellulosic and hemicellulosic materials, do not undergo undesired reactions and can be extracted from the biomass without substantial derivatisation. Depending on the process temperature of step (b) a pressure of between 1.1 and 15 bar, especially between 1.5 and 10 bar is applied. The reactor can include a heat exchanger, where incoming and outgoing flows exchange heat. The incoming flow is heated from ambient temperature to a level below the reaction temperature. The outgoing flow is cooled from reaction temperature to about 35°C, which is the preferred temperature for digestion in step (g). The reactor also includes a device to raise the temperature of the incoming flow to the desired level. Finally, the reactor allows for a space where the solids remain for a desired period of time of several seconds up to some hours, preferably 3-60 minutes, more preferentially 10-30 minutes.

In this pressurised embodiment of heating step (b), the biomass preferably has a water content of between 60 and 95 wt.%, more preferably between 70 and 90 wt.%. In other words, the dry matter content of the biomass material introduced in step (b) is preferably between 5 and 40 wt.%, more preferably between 10 and 30 wt.%.

As an alternative embodiment of step (b) the biomass is heated only moderately, to ambient temperature (arbitrarily chosen as 20°C) or higher, preferably 40°C or higher. A temperature above 100°C is not especially advantageous in this mode, but can be chosen provided that the system is closed and pressurised so as to avoid excessive evaporation of water. The heating and extraction in this embodiment can be performed by contacting the biomass, preferably with a water content of 60-95% by weight, although lower starting contents down to e.g. 40% or even 15% water can be feasible, in multiple stages with an aqueous liquid, for example by immersing or spraying, collecting the drained water and using the drained water in the preceding contacting step, i.e. in a counter-current mode. In this way a maximum extraction efficiency is coupled with a minimum need of contacting water. The preferred temperature for this embodiment is between 40 and 100°C, more preferred between 60 and 95°C.

Advantageously, the multiple stages are arranged in such a way that the quality of the extracting water increases with the progressing stages, relatively low quality water being used in a first stage and relatively high quality water being used in a later or last stage. Herein "low quality" and "high quality" primarily relate to temperature and dissolved matter (solutes), the higher the temperature or the lower the solutes level, the higher the quality. In a suitable embodiment, eluate (extract) of a later stage of the multiple extraction step (b) is used in a first step, and condensed steam, having relatively high temperature and low solutes level ("salt-free"), in particular less than 100 ppm of solutes (salts), resulting from the evaporation of water in step (e) is used as liquid water in a last stage of extraction step (b). Similarly water resulting from the dewatering of the extracted biomass in step (c) may be used in a last stage or second last stage of extraction step (b).

Suitable equipment for this moderate-temperature embodiment comprises multi-stage extraction units, or the like. A particularly useful example of equipment in this alternative is a belt press washer, where biomass is horizontally transported on a mesh. Liquid water is sprayed evenly on the biomass from above. Below the mesh a vacuum drains the liquid effluent. The spraying or dipping (immersion) may be done with clean water only and all effluent may be collected in one output. In order to use less fresh water, the effluent can be collected in separate sections, where the effluent of one section is sprayed on the preceding section, thus creating an advantageous staged counter current washing.

In this embodiment, the material resulting from the pretreatment step a), especially from a chopper or an extruder, is fed to a belt press washer. Preferred dry solid contents for input into a belt press washer or similar apparatus are between 15 and 70 wt.%, more preferably 20-50 wt.%. The treatment in step (b) (e.g. belt press washer) can be done with between 2-8 times the amount of water to dry solids, preferably 3-6 times, per washing cycle; this water includes the water already present in the input biomass. Multiple washing can be done with the corresponding larger amount of water, but preferably by reusing the spent water from a downstream washing step in the preceding step. Depending on the type of biomass used, between 10 and 40 wt.% of the dry solid content is extracted, leaving between 60 and 90%, in particular 65-80%, dry solid yield in the solid fraction. Alternatively, on the basis of total flows (water and dry solid together), the liquid effluent to biomass input weight ratio is preferably between 1.5 and 3.

After the heating and extraction step (b), excess water is removed from the biomass by mechanical means. Preferably the biomass is dewatered in step (c) by pressing, e.g. using a piston press, or a screw press equipped with perforations for draining the water that is pressed out of the biomass. Other suitable equipment comprises a filter press with chambers, a decanter or pneuma press. The pressures applied in step (c) may range from 20 to 1000 bar, preferably from 40 to 800 bar, more preferably from 100 to 700 bar. The temperature of pressing is not very critical, although it may be advantageous to use a temperature below 100°C, e.g. between 60 and 100°C for easy handling. The equipment, time, pressure and temperature of step (c) are chosen to achieve a substantial dewatering, to a residual water content of less than 50%, preferably of 40% or less, more preferably of 35% or less. Thus, the dewatered biomass produced in step (c) preferably has a water content between 40 and 20 wt.%, more preferably between 35 and 25 wt.%. It is conceivable that the cake is moisturized again and then pressed repeatedly in order to remove even more salts, but it is better to perform extra washing in the extraction stage (b), because there the biomass structure is more accessible.

The dewatered biomass resulting from step (c) may then be heat-treated in order to partially decompose the resulting plant material, including cellulose and comparable material. This can be done is a relatively wet process, i.e. with a water content of between, say, 40 and 20 wt.%, or in a relatively dry process, i.e. with a water content of less than 20 wt.%. Both process variants are within the scope of the present invention, and are referred to below as torrefaction. Both process variants can be performed at temperatures above 160°C, and in the substantial absence of oxygen, i.e. without air being introduced into the process step. Alternatively, the dewatered biomass may be directly dried, e.g. by steam-drying, or fed to a torrefaction unit, where it is heat-treated at temperatures of between 200 and 350°C, as described e.g. in WO 2007/ 078199.

In optional step (d), the press cake resulting from step (c) is heat-treated. This treatment affects the structure of the biomass further, so that it obtains the characteristics comparable to torrefied biomass. There is no substantial washing of the biomass and hence the by-products formed as a result of the decomposition reactions at elevated temperature - which are non-digestible - remain trapped in the cake.

In the relatively wet torrefaction step (d), the water content of the initial biomass can be the water content directly resulting from the mechanical dewatering step (c), i.e. preferably 20-40 wt.%. The torrefaction temperature in this embodiment is between 160 and 250°C, preferably between 180 and 230°C, more preferably 190-220°C. The pressure is sufficient to keep the water in the liquid state, i.e. typically between 10 and 50 bar, preferably between 15 and 25 bar. Conventional pressure vessels having the required inlets and outlets can be used for the wet (closed) torrefaction step, as referred to e.g. in NL1029909. At the end of step (d), pressure is released so that steam evaporates. This steam can be used elsewhere in the process for heating, or can be condensed to be used as extracting water in step (b). Also residual heat resulting from heating step (d) can be used for heating. Organic components present in the vapour end up in the effluent that goes to the digester. It is possible to release the steam gradually or in the form of a steam explosion. The latter may result in further crumbling of the product.

The "wet" torrefaction step (d) is followed by a drying step (e) wherein water is largely removed by evaporation, preferably using steam explosion. If necessary, a further drying step is used, leading to a final dry matter content of 85-95 wt.%.

In the relatively dry torrefaction step, the dewatered biomass produced in step (c) is first dried to a water content between 20 and 5 wt.% before being subjected to heating step (d). The torrefaction is then performed at conventional torrefaction temperatures between 200 and 320°C, preferably between 230 and 300°C, or even at pyrolysis temperatures of 300-600°C, preferably 320-500°C. Gas produced during the torrefaction is allowed to escape and can be further treated, e.g. by cooling and condensing volatised material (see e.g. WO 2005/056723 and NL 2005716).

Instead of the heating (torrefaction) step (d) described above, the dewatered biomass resulting from step (c), e.g. dewatered to a water content of 20-60 %, e.g. about 50%, can be dried in a more conventional manner, e.g. using steam drying with steam of e.g. 140-190°C. Spent steam from the steam drying, having a lower temperature, e.g. between 105 and 120°C can be reused by reheating and partly be condensed to be used as an extracting liquid in step (b) as described above. The dried solid from the drying step can be further dried if desired, and/or further processed mechanically to result in a powder, pelletised or otherwise compacted or shaped as described below, to produce a solid which can be used as a solid fuel.

The result of the process of the invention is a low salt content. In thermal conversion of biomass, salts are undesired components. In particular the alkali metals (Na, K, etc.) and halogens (Cl, Br, etc.) can cause serious problems in combustion systems and also in gasification. Alkali metals can result in ashes with low melting points, resulting in slagging and fouling, as well as agglomeration of ashes and bed materials. Halides are a risk for corrosion. As used herein, "salts" are defined as the sum of alkali metals and halides. Wherever "salt removal" is discussed, it means the removal of alkali metals and halides. Of these two elements, K and Cl are most abundant in biomass, therefore the salts in biomass are well represented by (but not limited to) potassium (K) and chlorine (Cl).

It should be noted that other salt-forming elements are removed as well, e.g. alkaline earth metals (Mg, Ca, etc.), even though their removal rate may be lower than of alkali metals and halogens. The same applies to sulphate (SO₄), phosphate (PO₄), transition metals (Fe, Zn, etc.). Removal of these from biomass is being regarded as beneficial, but less urgent, because - at the levels typically found in biomass - they cause less problems in thermal conversion systems. Even silicon (Si) and aluminium (Al) are partially removed by the present process. These elements are present in biomass as oxides. They may be part of the biomass, but also as clay or sand. In thermal conversion systems they are mostly inert and not regarded as problematic at the levels typically found in biomass.

As an indication only, the following examples can be given for the removal rate of salt-forming elements from grass in the present process:
∘ Na, K, Cl and Br: > 95%, especially >98%
∘ Mg: about 85%
∘ Ca: about 60%
∘ P and S: about 70% (as phosphate, sulphate and various other components)
∘ Zn: about 20%
∘ Fe: about 5%
∘ Si: about 15%
∘ Al: <5%.

Standards for biomass fuels include maximum levels for chlorine (Cl). According to the widely used DINplus and ENplus-A1 standard for clean biomass fuel pellets, the maximum level for Cl is 200 mg/kg (dry base). The other ENplus standards (A2 and B), the Swedish industrial standard SS187120 and the PFI standards of the USA set 300 mg/kg (dry basis) as limit. European industrial standards for co-firing pellets - currently (2012) under development - have maximum levels of 300, 500 or 1000 mg/kg (dry base) for three pellet qualities. The standards do not include maximum levels of potassium yet. This is due to the fact that they are based on wood as feedstock that has low levels of potassium, not causing problems. Once standards will be developed for fuels from agricultural residues with high potassium levels in the feed stock, a limit for potassium can be expected. For the time being a maximum potassium content of 500 mg/kg (dry basis) can be regarded as a target for good fuel quality. These and more stringent requirements can be met by using the process of the invention. In fact, it is the melting behaviour of the fuel residues which should be controlled, and this behaviour depends on various elements including silicon, and their interaction rather than of the amounts of elements such as potassium. However, the levels of alkali metals and halogens was found to be a good criterion for acceptable fuel characteristics.

This means for the present process, that a target for salts, defined as the sum of K and Cl content, can be a maximum of 700 mg/kg (dry basis) for the highest fuel quality. A second quality fuels may contain up to 1500 mg/kg (dry basis). A third quality of fuels may have a limit of 3000 mg/kg (dry basis).

The present process is capable of producing biomass-derived material having relative high initial salt contents, meeting high standards for biomass derived fuels in terms of chlorine, potassium and other salt-forming elements. High-temperature washing is not necessary for this salt removal.

Thus, in the present process, the content of alkali metals and/or halogens in the biomass is reduced with at least 80 wt.%, preferably with at least 90 wt.%, on dry weight basis, between step (a) and step(d), while a reduction with at least 95 wt.%, or even at least 98 wt.% is feasible and most preferred. In absolute terms, the treated biomass resulting from step (d) has a chloride content of less than 500 mg/kg, and/or chloride content of less than 500 mg/kg, on dry weight basis.

After the heating (extracting) and drying steps of the present process, it may be advantageous to compact the heated dewatered biomass in order to produce a solid material suitable for use as a fuel in a step (f). The solid material may be used directly as fuel, e.g. in the form of fluff or cakes with approximately 75% dry matter content, e.g. in fluidized bed combustion or on a grate stoker. In many cases, further after-treatment is desired, including (but not limited to):
i) Drying: needed for nearly all cases, where the material is not directly used. Biomass treated by the present process is significantly better resistant against biological degradation, but it is still possible that micro-organisms feed on it.
ii) Milling: the material is turned into a powder that can be used in pulverized fuel (PF) combustion or gasification, e.g. co-firing in power plants.
iii) Densification: the material is densified, e.g. by compressing to pellets or briquettes, which improves logistics. Generally no binder is necessary since the heat treatment is such that lignin often present in the biomass retains its binding capacities, though use of a binder is also possible.

Since the temperature in step (d) is typically low enough to prevent lignin from significant decomposition, no added binder is needed for the densification and that pellets become water repellent. Thermal drying in the after-treatment is an attractive possibility, because this prevents formation of a liquid effluent. Indigestible or toxic by-products stay in the solid and do not go to the digester. The amount of heat for drying is relatively small. A cake with 65% dry matter may have 75% dry matter content after steam explosion, which is close to the 85-90% needed for effective pelletisation.

Using the energy from combustion of the biogas, the process of the invention can run without heat input. By choosing the right process configuration and equipment, heat recovery is possible from both steps (b) and (d). When a gas engine is used also power can be generated for running the equipment, while still enough waste heat is available. Nevertheless, there are a number of ways to integrate the heat treatment with other processes. A combination with waste water treatment is of particular interest.

When after mechanical dewatering in step (c), water remains in the solids, this leads to extra heat input for step (d). However, this extra heat is released after step (d) as steam that is fully used for heating or extracting elsewhere in the process. Thus, the heating of additional moisture need not be a loss. Furthermore, the water is useful in step (d) in different ways, e.g. as lubricant.

Combinations of various forms of post-treatment are possible, in no particular order. A preferred combination would be drying to 10-15% moisture followed by pelletisation. Post-treatment may be done on site or at a different location, e.g. milling of the pellets at the power plant. The exact choice with regard to post-treatment depends on local conditions and the specification set by the user of the fuel product. These local conditions can include though are not limited to logistics (transport and storage), legislation, economics and existing facilities.

In a step (g) the aqueous effluent produced in step (c) is subjected to an anaerobic treatment. The effluent is rich in dissolved materials, such as salts and organic materials, including hemicellulose decomposition products, and is digestible, because in the preceding step (b) the temperature has remained under the level where unwanted by-products are formed that are not anaerobically digestible or have a negative influence on digestion (toxicity). In particular, the temperature has been kept below 160°C. The anaerobic treatment of step (g) results in the production of biogas, through the action of hydrolytic, acidogenic, and acetogenic bacteria and methanogenic archaea. The biogas can be used for heating steps (b) and/or (d) or for producing electrical power, and/or in the production of bio-alcohols.

Anaerobic treatment can be performed in a conventional reactor, or in e.g. an Upflow Anaerobic Sludge Blanket (UASB) reactor, using an anaerobic culture from commercial anaerobic digestions or fermentations as a starting sludge. The temperatures used in the anaerobic reactor are typical for mesophilic micro-organisms, i.e. between 15 and 55°C, preferably between 30 and 45°C. The reactor has means for collecting biogas at the top, which can be used for heating purposes or for generating electrical power. If necessary, the anaerobic treatment can be followed by an aerobic post-treatment; however, such a post-treatment can be dispensed with for most types of biomass and for most effluent quality requirements. Biogas from the digester can be used on site to generate heat and possibly power. The biogas contains enough energy to supply the energy for running the process.

Alternatively, anaerobic fermentation can be performed for converting the decomposition products to ethanol or other alcohols, by using yeasts capable of converting sugars (e.g. glucose from cellulose) to alcohols and carbon dioxide. The yeast may advantageously have been engineered to be capable of converting other sugars (arabinose, xylose) from hemicelluloses to alcohols as well, e.g. by introducing xylose-isomerase and/or arabinose-converting enzymes into the yeast (see e.g. WO 03/062430, WO 2008/041840, WO 2010/074577).

The conditions in the heating and extraction step (b) may be chosen in such a way that potassium is mostly removed, but the bulk of nitrogen and phosphate remains in the solid phase and does not become part of the effluent; this may be done by selecting relatively low washing temperature, e.g. below 100°C, in particular between 40 and 80 °C, or by adjusting the pH. This can be advantageous when the effluent is discharged into surface water or onto soil, where K and carbonaceous compound are acceptable, but the presence of N and P is undesired. An example of this situation is the use of invasive plant species as feedstock and returning the effluent to the biotope of the plants, where renewed growth is not desired.

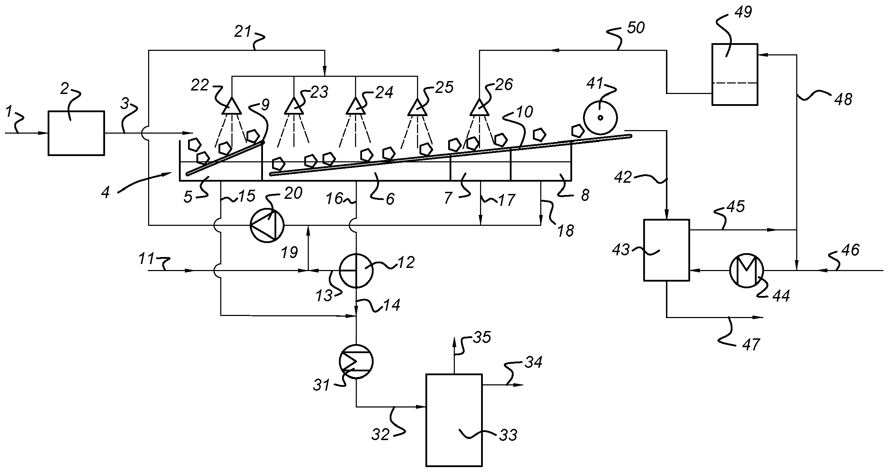

### Description of the drawing

The appending Figure shows an embodiment of the process of the invention, using multi-stage extraction and anaerobic treatment of the extract.

Referring to the Figure, biomass is introduced through line 1 into a mechanical pretreatment device 2, in particular a chopper. The chopped material is fed through line 3 to extracting device 4. Device 4 comprises multiple extraction compartments 5, 6, 7 and 8. Further compartments can be added if desired. The biomass is transported through the extraction device using transporter belts 9 and 10. Instead of these, there may be a single belt or more than two belts. Extraction liquid is sprayed on the biomass using sprayers 22, 23, 24, 25 and 26, while any further number of sprayers can be used if desired. Spent liquid (extract) is discharged from the extraction compartments 5, 6, 7 and 8, through lines 15, 16, 17 and 18, respectively.

The extracts are partly fed to an anaerobic reactor 33 through heat exchanger 31 and feed line 32 and partly reused as extracting liquid 21. Anaerobic reactor 33 can be a UASB reactor inoculated with suitable anaerobic bacteria. Biogas is collected through line 35, and liquid effluent, possibly containing alcohols produced by the anaerobic bacteria, is discharged through line 34.

In the Figure, the first extract 15 is entirely fed to the anaerobic treatment, while the last extracts 17 and 18 are entirely reused as extracting liquid. The intermediate extract 16 is divided between the anaerobic reactor feed and the extracting liquid through distributor 12 and lines 13 and 14, respectively. However, other divisions can be equally suitable. Fresh water from an external source can be used as supplement extraction liquid fed through line 11, and after combination with partial extract from 13 to line 19 and with extracts 17 and 18, the combined extraction water is fed to the sprayers 22-25 via pump 20 and line 21. As an alternative, it is possible that extract 18 is fed to sprayer 26 and/or that extracts 17 (and 18) are fed to sprayers 23-25 only, sprayer 22 being fed by extract 16.

The solid which has been extracted in extracting device 4 is dewatered by press 41, and the resulting water is collected in compartment 8. The dewatered biomass is transported through line 42 to steam drier 43. Steam is introduced through line 46 and spent steam is discharged through 45 and may be reused after reheating through 44, and is partly fed to condenser 49 through line 48. The dried biomass is discharged from the drier 43 through conveying means 47 and further processed. The steam condensed in condenser 49 passes through line 50, to be used as an extracting liquid e.g. via sprayer 26.

### Examples

In all examples below, grass was used as a feedstock in the form of hay.

### Example 1: Pretreatment in extruder

Hay (dry matter content about 30%) was extruded in an extruder with a capacity of 150 kg hay per hour. The result was extruded material, wherein cell structure was broken due to the stress in the extruder. The hay was fed at ambient temperature, while extruded hay is as hot as 100°C. To illustrate the effect of extrusion:, extruded hay can be submerged in water and does not float, unlike the feedstock material. The chloride content was 11,000 mg/kg and the potassium content was 15,000 mg/kg, both on dry basis.

### Example 2: Washing at 60°C

Extruded hay from Example 1 was washed in an industrial washing machine. An amount of 5 kg extruded hay was washed using about 32 litres of water. The hay was put in a bag made of mesh with 100 µm holes. The water temperature was kept at 60°C and the duration of the washing was 1 hour. At the end of the washing cycle, the hay was centrifuged, so that free water was removed. The driving force in the centrifuge is equivalent to the use of vacuum in a belt press washer. The result of the washing was about 11 kg wet hay with a dry matter content of 33 wt%. About 25.5 litre prewash liquid was produced with a solids content of 4.9%. As a result, some 25% of the dry mass of the extruded hay is present in the prewash effluent, partly in dissolved form, partly as fine suspended particles. The washed hay has a dry matter content of 32 wt%. The washed hay has a chloride content of 3500 mg/kg and a potassium content of 590 mg/kg, both on dry basis. Compared to the original material this is 68% removal of chloride and 61% removal of potassium.

### Example 3 : Washing at 60 and 160°C followed by pressing

An amount of washed hay from Example 2 was subjected to further washing at 160°C. Fresh water was added to 4.5 kg washed hay (1.5 kg dry matter), so that the hay was submerged in about 14 lifters of water. The washing was performed in a 20 litre autoclave. The contents were heated to a temperature of 160°C and kept at that condition for 10 minutes, then the autoclave was cooled. The effect is that about 20% of the solids has gone into solution, forming a slurry with 92 wt% moisture. A batch of about 10 litres of slurry was pressed into a cake in horizontal, uni-axial press, at 533 bar, so that nearly all liquid was expelled. The resulting cake had a dry matter contents of about 65 wt%. The cake had a chloride content of 350 mg/kg and a potassium content of 750 mg/kg, both on dry basis. Compared to the original material this is 97% removal of chloride and 95% removal of potassium.

### Example 4: Repeated prewashing at 90°C followed by pressing

The extruded hay from Example 1 was also subjected to washing at 90°C. In three cycles, an amount of 5.0 kg hay was washed at 90°C in three cycles of 1 hour, 15 minutes and 15 minutes respectively, where after each washing cycle, the effluent was removed by means of centrifuging. After the first cycle, the Cl content was 3400 mg/kg and after the second and third cycle, it was further lowered to 910 and 350 mg/kg, respectively. The potassium contents were 5500, 2200 and 1000 mg/kg after each cycle, respectively. After centrifuging the hay has a dry matter content of 31 wt%, but it can be pressed into a cake with a dry matter content of 59 wt%. This implies a further lowering of the chlorine content to 110 mg/kg and of the potassium content to 310 mg/kg. Compared to the original material this is a 99% removal of chloride and 98% removal of potassium. All Cl and K contents on dry basis.

### Example 5: Repeated prewashing at 90°C, 160°C followed by pressing

An amount of washed hay from Example 4 (without pressing) was subjected to further washing at 160°C following the same procedure as in Example 3. The resulting cake had a dry matter content of 53 wt%, a chloride content of 120 mg/kg and a potassium content of 200 mg/kg, both on dry basis. Compared to the original material this is 99% removal of chloride and 99% removal of potassium. All Cl and K contents are on dry basis.

### Example 6: Heat treatment of washed hay at 190°C without dewatering

Washed hay from Example 4 was subjected to wet torrefaction conditions. The input material had a dry matter content of 59%, a chlorine content to 110 mg/kg and a potassium content to 310 mg/kg. An amount of 50 gram was put in an autoclave of 100 ml and heated to 190°C for 30 minutes. After the heat treatment, the autoclave was cooled to 100°C and then opened to allow evaporation until the material reached room temperature. The output material had a dry matter content of 73%, a chlorine content to 120 mg/kg and a potassium content to 330 mg/kg. The output material had lost about 5% dry matter mass due to the formation of CO₂ and small amounts of other volatile components.

For comparison, hay was subjected to washing at 60°C, hydrothermal treatment in a single step at 190°C in a large amount of water and subjected to mechanical dewatering of the resulting slurry in a press. The end products of that material had a dry matter content of 64 wt%, a chlorine content of 130 mg/kg and a potassium content of 330 mg/kg. Both resulting materials virtually identical, not only in Cl and K content, but also in grindability and density when compressed.

### Example 7: Grindability

Two cakes were prepared. One cake was made by washing, heat treatment and pressing following procedures described in Example 2. The other cakes was prepared in exactly the same way, but by heat treatment at 190°C. Both cakes were milled in a lab-scale Retch cutter mill using a screen of 500 micron. This size results in powder with a size distribution suitable for pulverized fuel combustion. The specific power consumption for milling of the cakes made from material heat treated at 160 and 190°C were 476 and 221 kJ/kg, respectively. For comparison, a third milling was done using extruded hay prepared as described in Example 4 and dried. The specific power consumption of this material was 561 kJ/kg. It was concluded that heat treatment at 160°C results in about 15% less energy needed to pulverise hay, but that further heat treatment at 190°C has a substantial impact and lowers the lower energy requirements for milling by about 60%.

### Example 8: Digestion

The effluents from Example 2 and a mixture of effluents from Example 2 and Example 3 were tested for anaerobic digestibility in a lab-scale UASB reactor inoculated with bacteria from a regular waste water treatment plant. There was no difference in biogas yield per unit of organic material between both tests. The conversion efficiency of the organic material into biogas based on carbon-containing components in the effluent fluctuated between 80 and 90 %. The high conversion efficiency indicates that the water soluble part of the original biomass is almost completely transformed into an energy carrier. Only a small part of the original energy content of the biomass is lost.

When effluent from Example 2 was mixed with effluent from heat treatment similar to Example 3, but performed at 190°C, a difference was noted. The conversion efficiency based on carbon-containing components in the effluent decreased from 80-90% to 70-80%. No toxicity of the effluent was noted in any of the digestion experiments. Similar results were found for the anaerobic digestion of effluents from treatment of other biomasses, such as fresh grass, beet leaves and reed. By increasing the treatment temperature from 150°C to 230°C the efficiency of the conversion of organic material in the effluent into biogas under anaerobic conditions decreased from 80-90% to 50-60%.

## Claims

1. A process for the treatment of biomass comprising:
(a) pre-treating wet biomass, preferably mechanically pre-treating wet biomass;
(b) subsequently washing and extracting the pre-treated biomass with liquid water at a temperature between ambient temperature and 160°C;
(c) mechanically dewatering the extracted biomass obtained in step (b), to produce a dewatered biomass and an aqueous effluent;
(d) optionally heating the dewatered biomass to a temperature above 160°C;
(e) drying the dewatered biomass;
(f) optionally compacting the dried biomass to produce a solid material;
(g) subjecting the aqueous effluent to anaerobic treatment.

2. A process according to claim 1, wherein step (e) comprises evaporation of water, preferably comprising steam drying.

3. A process according to claim 2, wherein in a step (h) steam resulting from the evaporation of water in step (e) is condensed resulting in salt-free water and used as liquid water in step (b).

4. A process according to claim 3, wherein in step (b) the biomass is first extracted with water not derived from step (h) and then with water derived from step (h).

5. A process according to any one of claims 1-4, wherein the dewatered biomass produced in step (c) and subjected to step (d) or step (e) has a water content between 40 and 20 wt.%, or wherein the dewatered biomass produced in step (c) is further dried to a water content between 20 and 5 wt.% before being subjected to heating step (d) and is heated in step (d) to a temperature between 250 and 320°C.

6. A process according to any one of claims 1-5, wherein in heating step (d) the dewatered biomass is heated to 180-250°C, preferably 190-220°C, preferably at a pressure between 15 and 25 bar.

7. A process according to claim 5 or 6, wherein the heated dewatered biomass is dried in step (e) to a dry matter content of 85-95 wt.%.

8. A process according to any one of the preceding claims, wherein the biomass is a fibrous biomass, preferably selected from woody plants, herbaceous plants, agricultural residues and forestry residues, wherein the biomass preferably comprises grasses, reeds and/or leaves.

9. A process according to claim 1, wherein the pre-treatment (a) comprises extrusion and/or milling and/or chopping.

10. A process according to any one of the preceding claims, wherein in step (b) the biomass has a water content of between 60 and 95 wt.%, preferably between 70 and 90 wt.%; and/or wherein in step (b) the biomass is heated to 100-160°C at a pressure of between 1.1 and 15 bar, especially between 1.5 and 10 bar.

11. A process according to any one of the preceding claims, in particular claim 3 or 4,
wherein in step (b) the biomass is heated to 40-100°C, preferably comprising repeatedly contacting the biomass with water and draining water from the biomass, in a counter-current mode.

12. A process according to any one of the preceding claims, wherein the biomass is dewatered in step (c) by pressing, wherein in step (c) preferably a pressure between 50 and 1000 bar, more preferably between 100 and 700 bar, is applied.

13. A process according to any one of the preceding claims, wherein in a step (f) following step (d) or (e), the heated dewatered biomass is compacted to produce solid material suitable for use as a fuel.

14. A process according to any one of the preceding claims, wherein anaerobic treatment of step (g) results in the production of biogas, which can be used for heating steps (b) and/or (d) or for producing electrical power, and/or in the production of bio-alcohols.

15. A process according to any one of the preceding claims, wherein residual heat or steam resulting from heating step (d), (e) or (f) is used for heating in other steps, in particular for heating step (b).

## Patentansprüche

1. Verfahren zum Behandeln von Biomasse, das Folgendes aufweist:
(a) Vorbehandeln von feuchter Biomasse, vorzugsweise mechanisches Vorbehandeln von feuchter Biomasse;
(b) anschließendes Waschen und Extrahieren der vorbehandelten Biomasse mit flüssigem Wasser bei einer Temperatur zwischen Raumtemperatur und 160°C;
(c) mechanisches Entwässern der extrahierten Biomasse, die im Schritt (b) erhalten wurde, um eine entwässerte Biomasse und ein wässriges Abwasser zu erzeugen;
(d) optionales Erwärmen der entwässerten Biomasse auf eine Temperatur über 160°C;
(e) Trocknen der entwässerten Biomasse;
(f) optionales Verdichten der getrockneten Biomasse, um eine feste Materie zu erzeugen;
(g) Aussetzen des wässrigen Abwassers gegenüber einer anaeroben Behandlung.

2. Verfahren gemäß Anspruch 1, wobei der Schritt (e) die Evaporation von Wasser aufweist, vorzugsweise wobei der Schritt (e) Dampftrocknen aufweist.

3. Verfahren gemäß Anspruch 2, wobei in einem Schritt (h) der Dampf, der aus der Evaporation des Wassers in Schritt (e) resultiert, zu salzfreiem Wasser kondensiert und als flüssiges Wasser im Schritt (b) genutzt wird.

4. Verfahren gemäß Anspruch 3, wobei in Schritt (b) die Biomasse zuerst mit Wasser, das nicht vom Schritt (h) stammt, und dann mit Wasser, das von Schritt (h) stammt, extrahiert wird.

5. Verfahren nach einem der Ansprüche 1 bis 4, wobei die entwässerte Biomasse, die in Schritt (c) erzeugt wird, und dem Schritt (d) oder dem Schritt (e) ausgesetzt wird, einen Wassergehalt zwischen 40 und 20 Gewichtsprozent aufweist, oder wobei die entwässerte Biomasse, die in Schritt (c) erzeugt wird, ferner auf einen Wassergehalt zwischen 20 und 5 Gewichtsprozent getrocknet wird, bevor sie dem Erwärmungsschritt (d) ausgesetzt wird und in Schritt (d) auf eine Temperatur zwischen 250 und 320°C erwärmt wird.

6. Verfahren nach einem der Ansprüche 1 bis 5, wobei im Erwärmungsschritt (d) die entwässerte Biomasse auf 180-250°C, vorzugsweise auf 190-220°C, erwärmt wird, vorzugsweise bei einem Druck zwischen 15 und 25 bar.

7. Verfahren nach Anspruch 5 oder 6, wobei die erwärmte entwässerte Biomasse im Schritt (e) zu einem Trockenmassegehalt von 85-95 Gewichtsprozent getrocknet wird.

8. Verfahren nach einem der vorhergehenden Ansprüche, wobei die Biomasse eine faserige Biomasse ist, vorzugsweise ausgewählt aus Holzgewächsen, krautigen Gewächsen, landwirtschaftlichen Reststoffen und forstwirtschaftlichen Reststoffen, wobei die Biomasse vorzugsweise Gräser, Schilfe und/oder Blätter aufweist.

9. Verfahren nach Anspruch 1, wobei die Vorbehandlung (a) ein Extrudieren und/oder Mahlen und/oder Hacken bzw. Häckseln aufweist.

10. Verfahren nach einem der vorhergehenden Ansprüche, wobei in Schritt (b) die Biomasse einen Wassergehalt zwischen 60 und 95 Gewichtsprozent, vorzugsweise zwischen 70 und 90 Gewichtsprozent besitzt, und/oder wobei in Schritt (b) die Biomasse auf 100-160°C erwärmt wird bei einem Druck zwischen 1,1 und 15 bar, vorzugsweise zwischen 1,5 und 10 bar.

11. Verfahren nach einem der vorhergehenden Ansprüche, insbesondere Anspruch 3 oder 4, wobei in Schritt (b) die Biomasse auf 40-100°C erwärmt wird, vorzugsweise umfassend dass die Biomasse wiederholt mit Wasser in Berührung gebracht und Wasser von der Biomasse entzogen wird, in einem Gegenflussmodus.

12. Verfahren nach einem der vorhergehenden Ansprüche, wobei die Biomasse in Schritt (c) durch Pressen entwässert wird, wobei in Schritt (c) vorzugsweise ein Druck zwischen 50 und 1000 bar, noch bevorzugter zwischen 100 und 700 bar, angelegt wird.

13. Verfahren nach einem der vorhergehenden Ansprüche, wobei in einem Schritt (f), der dem Schritt (d) oder (e) folgt, die erwärmte entwässerte Biomasse verdichtet wird, um feste Materie zu erzeugen, die als Treibstoff verwendet werden kann.

14. Verfahren nach einem der vorhergehenden Ansprüche, wobei die anaerobe Behandlung des Schrittes (g) in der Erzeugung von Biogas resultiert, welches genutzt werden kann für die Erwärmungsschritte (b) und/oder (d) oder zum Erzeugen elektrischer Leistung und/oder Bioalkohols.

15. Verfahren nach einem der vorhergehenden Ansprüche, wobei die Restwärme oder der Dampf der Erwärmungsschritte (d), (e) oder (f) zum Erwärmen in den anderen Schritten genutzt wird, insbesondere für den Erwärmungsschritt (b).

## Revendications

1. Un procédé pour le traitement de biomasse, comprenant :
(a) le prétraitement de la biomasse humide, de préférence un pré-traitement mécanique de la biomasse humide;
(b) le lavage et l'extraction subséquents de la bio-masse pré-traitée avec de l'eau sous forme liquide à une température comprise entre la température ambiante et 160°C;
(c) l'assèchement mécanique de la biomasse extraite obtenue dans l'étape (b), pour produire une biomasse asséchée et un effluent aqueux;
(d) éventuellement le chauffage de la biomasse asséchée à une température supérieure à 160°C;
(e) le séchage de la biomasse asséchée;
(f) éventuellement le compactage de la biomasse séchée pour produire un matériau solide;
(g) le fait de soumettre l'effluent aqueux à un traitement anaérobie.

2. Un procédé selon la revendication 1, dans lequel l'étape (e) comprend l'évaporation de l'eau, de préférence comprenant un séchage à la vapeur.

3. Un procédé selon la revendication 2, dans lequel, dans une étape (h) la vapeur résultant de l'évaporation de l'eau dans l'étape (e) est condensée ce qui conduit à l'obtention d'eau exempte de sel, laquelle eau est utilisée comme eau sous forme liquide dans l'étape (b).

4. Un procédé selon la revendication 3, dans lequel, dans l'étape (b), la biomasse est d'abord extraite avec de l'eau ne provenant pas de l'étape (h), puis ensuite avec de l'eau issue de l'étape (h).

5. Un procédé selon l'une quelconque des revendications 1-4, dans lequel la biomasse asséchée produite dans l'étape (c) et soumise à l'étape (d) ou à l'étape (e) présente une teneur en eau comprise entre 40 et 20% en poids, ou dans lequel la biomasse asséchée produite dans l'étape (c) subit un séchage supplémentaire jusqu'à une teneur en eau comprise entre 20 et 5% en poids avant d'être soumise à une étape de chauffage (d) et est chauffé dans l'étape (d) à une température comprise entre 250 et 320°C.

6. Un procédé selon l'une quelconque des revendications 1-5, dans lequel, dans l'étape de chauffage (d), la biomasse asséchée est chauffée entre 180-250°C, de préférence entre 190-220°C, de préférence sous une pression comprise entre 15 et 25 bars.

7. Un procédé selon la revendication 5 ou 6, dans lequel la biomasse asséchée chauffée est séchée dans l'étape (e) jusqu'à une teneur en matière sèche de 85-95% en poids.

8. Un procédé selon l'une quelconque des revendications précédentes, dans lequel la biomasse est une biomasse fibreuse, de préférence choisie parmi les plantes ligneuses, les plantes herbacées, les résidus agricoles et les résidus forestiers, dans lequel la biomasse comprend de préférence des graminées, des roseaux et / ou des feuilles.

9. Un procédé selon la revendication 1, dans lequel le prétraitement (a) comprend une extrusion et/ou un broyage et/ou un hachage.

10. Un procédé selon l'une quelconque des revendications précédentes, dans lequel, dans l'étape (b), la biomasse présente une teneur en eau comprise entre 60 et 95% en poids, de préférence entre 70 et 90% en poids ; et/ou dans lequel, dans l'étape (b), la biomasse est chauffée à 100-160°C sous une pression comprise entre 1,1 et 15 bars, en particulier entre 1,5 et 10 bars.

11. Un procédé selon l'une quelconque des revendications précédentes, en particulier selon la revendication 3 ou 4, dans lequel, dans l'étape (b), la biomasse est chauffée à 40-100°C, de préférence comprenant la mise en contact répétée de la biomasse avec de l'eau et le drainage de l'eau de la biomasse, dans un mode à contre-courant.

12. Un procédé selon l'une quelconque des revendications précédentes, dans lequel la biomasse est asséché dans l'étape (c) par pressage, dans lequel dans l'étape (c) est appliquée de préférence une pression comprise entre 50 et 1000 bars, de préférence entre 100 et 700 bars.

13. Un procédé selon l'une quelconque des revendications précédentes, dans lequel, dans une étape (f) succédant à l'étape (d) ou (e), la biomasse asséchée chauffée est compactée pour produire un matériau solide convenant pour une utilisation comme combustible.

14. Un procédé selon l'une quelconque des revendications précédentes, dans lequel le traitement anaérobie de l'étape (g) conduit à la production de biogaz, qui peut être utilisé pour des étapes de chauffage (b) et/ou (d) ou pour la production d'énergie électrique, et/ou dans la production de bio-alcools.

15. Un procédé selon l'une quelconque des revendications précédentes, dans lequel la chaleur résiduelle ou la vapeur résultant de l'étape de chauffage (d), (e) ou (f) est utilisé pour le chauffage dans d'autres étapes, en particulier pour l'étape de chauffage (b).
